(19) Europäisches Patentamt
European Patent Office
Office européen des brevets

(11) Veröffentlichungsnummer: **0 391 131 A2**

(12) **EUROPÄISCHE PATENTANMELDUNG**

(21) Anmeldenummer: **90105292.8**

(51) Int. Cl.⁵: **C07F 9/165, A01N 57/10**

(22) Anmeldetag: **21.03.90**

(30) Priorität: **03.04.89 DE 3910662**

(43) Veröffentlichungstag der Anmeldung: **10.10.90 Patentblatt 90/41**

(84) Benannte Vertragsstaaten: **BE CH DE ES FR GB IT LI NL**

(71) Anmelder: **BAYER AG**
**D-5090 Leverkusen 1 Bayerwerk(DE)**

(72) Erfinder: **Maurer, Fritz, Dr.**
**Roeberstrasse 8**
**D-5600 Wuppertal 1(DE)**
Erfinder: **Hartwig, Jürgen, Dr.**
**Franz-Esser-Strasse 44**
**D-5090 Leverkusen 1(DE)**
Erfinder: **Becker, Benedikt, Dr.**
**c/o Versuchsstation Pflanzenschutz**
**I-39050 Pineta di Laives(BZ)Steinmannhof(IT)**
Erfinder: **Stendel, Wilhelm, Dr.**
**In den Birken 55**
**D-5600 Wuppertal 1(DE)**

(54) **Thiophosphorsäure-fluoralkylester.**

(57) Die Erfindung betrifft die neuen Thiophosphorsäurefluoralkylester der allgemeinen Formel (I),

$$X_{3-m}CF_m-CH_2-O-\overset{\overset{Y}{\|}}{P}\begin{matrix}\nearrow OR\\ \searrow SR^1\end{matrix} \qquad (I)$$

in welcher
R für Alkyl mit 1 bis 8 Kohlenstoffatomen,
$R^1$ für Alkyl mit 1 bis 8 Kohlenstoffatomen,
X für Chlor oder Brom,
Y für Sauerstoff oder Schwefel und
m für die Zahl 1 oder 2 steht,
welche als Schädlingsbekämpfungsmittel verwendet werden können.

EP 0 391 131 A2

## Thiophosphorsäure-fluoralkylester

Die Erfindung betrifft neue Thiophosphorsäure-fluoralkylester, mehrere Verfahren zu ihrer Herstellung sowie ihre Verwendung als Schädlingsbekämpfungsmittel, vorzugsweise als Insektizide.

Es ist bereits bekannt, daß bestimmte Thiophosphorsäurehalogenalkylester, wie z.B. Thiophosphorsäure-S-sec-butyl-O-(2,2,2-trichlorethyl)-O-ethylester, zur Bekämpfung von Insekten geeignet sind (vgl. EP-A-0 000 528).

Es wurden nun die neuen Thiophosphorsäurefluoralkylester der allgemeinen Formel (I),

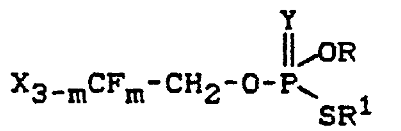

(I)

in welcher
R für Alkyl mit 1 bis 8 Kohlenstoffatomen,
$R^1$ für Alkyl mit 1 bis 8 Kohlenstoffatomen,
X für Chlor oder Brom,
Y für Sauerstoff oder Schwefel und
m für die Zahl 1 oder 2 steht,
gefunden.

Weiter wurde gefunden, daß man die neuen Thiophosphorsäurefluoralkylester der allgemeinen Formel (I) erhält,
wenn man

a) Halogenalkohol- oder Halogenalkoholat-Derivate der allgemeinen Formel (II)

$X_{3-m}CF_m$-$CH_2$-OM (II)

in welcher
X und m die oben angegebene Bedeutung haben und
M für Wasserstoff oder ein Alkalimetallkation steht,
mit Thiophosphorsäurehalogeniden der Formel (III),

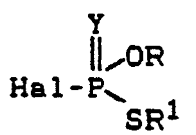

(III)

in welcher
R, $R^1$ und Y die oben angegebene Bedeutung haben und
Hal für Halogen, vorzugsweise Chlor oder Brom steht,
gegebenenfalls in Gegenwart eines Säureakzeptors und gegebenenfalls in Gegenwart eines Verdünnungsmittels umsetzt,
oder

b) Thionophosphorsäuredichloride der Formel (IV)

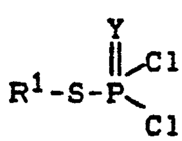

(IV)

in welcher
$R^1$ und Y die oben angegebene Bedeutung haben,
zunächst mit Alkoholen oder Alkoholaten der Formel (V),
R - OM (V)
in welcher

R und M die oben angegebene Bedeutung haben,
und anschließend mit Halogenalkohol-Derivaten der Formel (II)
$X_{3-m}CF_m-CH_2-OM$ (II)
in welcher
X, M und m die oben angegebene Bedeutung haben,
gegebenenfalls in Gegenwart eines Säureakzeptors und gegebenenfalls in Gegenwart eines Verdünnungsmittels umsetzt.

Die neuen Thiophosphorsäure-fluoralkylester der Formel (I) zeichnen sich in überragender Weise durch eine besonders hohe Wirksamkeit und Verträglicheit als Schädlingsbekämpfungsmittel, insbesondere als Insektizide, Akarizide und Nematizide aus.

Die erfindungsgemäßen Stoffe stellen somit eine wertvolle Bereicherung der Technik dar.

In den allgemeinen Formeln bedeutet Alkyl geradkettiges oder verzweigtes Alkyl mit 1 bis 8 Kohlenstoffatomen, bevorzugt mit 1 bis 6 und besonders bevorzugt mit 1 bis 4 Kohlenstoffatomen; beispielhaft seien genannt Methyl, Ethyl, n- und i-Propyl, n-, i-, s- und t-Butyl, Pentyl, Hexyl und Octyl.

Alkyl R steht vorzugsweise für Ethyl. Alkyl $R^1$ steht vorzugsweise für $C_3$ oder $C_4$-Alkyl, insbesondere für n-Propyl oder sec.-Butyl.

In der allgemeinen Formel steht Y vorzugsweise für Sauerstoff.

Der Rest $X_{3-m}$ $CF_m$ bedeutet vorzugsweise $ClCF_2$- oder $Cl_2CF$-.

Von den erfindungsgemäßen Thiophosphorsäure-fluoralkylestern der Formel (I) sind diejenigen bevorzugt,
in welchen
R für Alkyl mit 1 bis 4 Kohlenstoffatomen,
$R^1$ für Alkyl mit 1 bis 4 Kohlenstoffatomen,
X für Chlor oder Brom,
Y für Sauerstoff oder Schwefel und
m für die Zahl 1 oder 2 steht.

Besonders bevorzugt sind diejenigen Thiophosphorsäurefluoralkylester der Formel (I),
in welchen
R für Methyl, Ethyl, n- oder i-Propyl, n-, i-, s-oder t-Butyl (vorzugsweise Ethyl) steht,
$R^1$ für Methyl, Ethyl, n- oder i-Propyl, n-, i-, s-oder t-Butyl (vorzugsweise n-Propyl oder s-Butyl) steht,
X für Chlor oder Brom (vorzugsweise Chlor) steht,
Y für Sauerstoff oder Schwefel (vorzugsweise Sauerstoff) steht und
m für die Zahl 1 oder 2 steht.

Ganz besonders bevorzugt sind diejenigen Thiophosphorsäurefluoralkylester der Formel (I),
in welchen
R für Methyl oder Ethyl (vorzugsweise Ethyl),
$R^1$ für n-Propyl und sec-Butyl,
X für Chlor,
Y für Sauerstoff oder Schwefel (vorzugsweise Sauerstoff) und
m für die Zahl 1 oder 2 steht.

Die für die Verbindungen der Formel (I) angegebenen bevorzugten Definitionen gelten für die Ausgangsverbindungen der Formeln (II), (III), (IV) und (V) entsprechend.

Im einzelnen seien außer den bei den Herstellungsbeispielen genannten Verbindungen die folgenden Verbindungen der Formel (I),

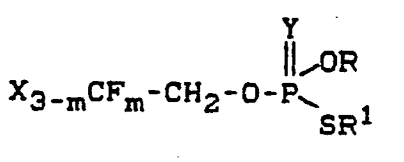

(I)

genannt:

Tabelle 1

| R | $R^1$ | X | Y | m |
|---|---|---|---|---|
| $C_2H_5$ | $C_3H_7$-n | Cl | S | 2 |
| $C_2H_5$ | $C_4$-$H_9$-sec | Cl | S | 2 |
| $C_2H_5$ | $C_3H_7$-n | Cl | O | 1 |
| $C_2H_5$ | $C_4$-$H_9$-sec | Cl | O | 1 |
| $C_2H_5$ | $C_3H_7$-n | Br | O | 2 |

Verwendet man beispielsweise für das erfindungsgemäße Verfahren (a) 2-Chlor-2,2-difluorethanol und Thiophosphorsäure-O-ethyl-S-sec-butylesterchlorid als Ausgangsstoffe, so kann die entsprechende Reaktion durch das folgende Formelschema skizziert werden:

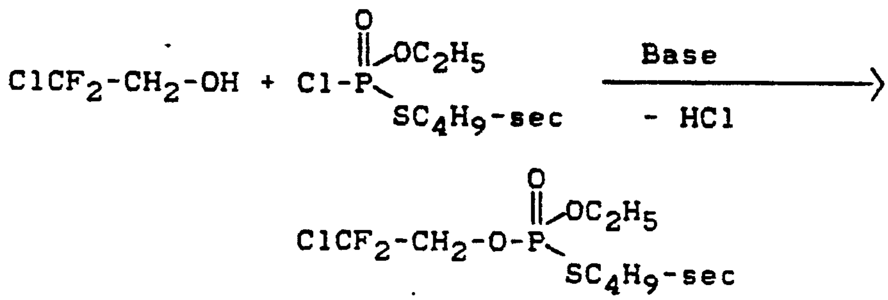


Verwendet man beispielsweise für das erfindungsgemäße Verfahren (b) Thiophosphorsäure-S-propylester-dichlorid, Ethanol und 2-Chlor-2,2-difluorethanol als Ausgangsstoffe, so kann die entsprechende Reaktion durch das folgende Formelschema skizziert werden:

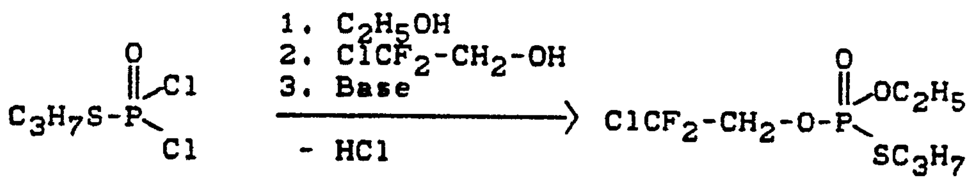


Die bei den erfindungsgemäßen Verfahrenvarianten (a) und (b) als Ausgangsstoffe für die Herstellung der neuen Verbindungen der Formel (I) einzusetzenden Halogenalkohol- oder Halogenalkoholatderivate sind durch die Formel (II) definiert.

Die Halogenalkoholatderivate der Formel (II) sind bekannt (vgl. beispielsweise CS 246495; JP 61268639).

Beispiele für in den Verfahrensvarianten (a) und (b) als Ausgangsstoffe geeigneten Alkohole und Alkoholate der allgemeinen Formel (II) sind 2-Brom-2,2-difluorethanol, 2,2-Dichlor-2-fluor-ethanol und 2-Chlor-2,2-difluorethanol sowie die Natrium- oder Kaliumsalze dieser Alkohole.

Die außerdem in der Verfahrensvariante (a) als Ausgangsstoffe einzusetzenden Thiophosphorsäureesterhalogenide sind durch die Formel (III) definiert. In dieser Formel stehen R, $R^1$ und Y für diejenigen Reste, welche bei der Definition in Formel (I) angegeben sind. Hal steht in dieser Formel für Halogen, insbesondere für Chlor oder Brom.

Die Verbindungen der Formel (III) sind bekannt.

Als Beispiele für die Halogenide der Formel (III) seien genannt:

O-Methyl-S-methyl-, O-Methyl-S-ethyl-, O-Methyl-S-n-propyl-, O-Methyl-S-isopropyl-, O-Methyl-S-n-butyl-, O-Methyl-S-isobutyl-, O-Methyl-S-sec.-butyl-, O-Methyl-S- tert.-butyl-, O-Ethyl-S-methyl-, O-Ethyl-S-ethyl-, 0-Ethyl-S-n-propyl-, O-Ethyl-S-isopropyl-, O-Ethyl-S-n-butyl-, O-Ethyl-S-iso-butyl-, O-Ethyl-S-sec.-butyl-, O-Ethyl-S-tert.-butyl-thiolphosphorsäure-diesterchlorid sowie die entsprechenden Thiono-thiol-phosphorsäure-diesterchloride.

Die bei der erfindungsgemäßen Verfahrenvariante (b) als Ausgangsstoffe für die Herstellung der neuen

Verbindungen der Formel (I) einzusetzenden Thiophosphorsäureesterchloride sind durch die Formel (IV) definiert.

Die Thiophosphorsäureesterdichloride der Formel (IV) sind bekannt (vgl. beispielsweise Houben-Weyl, Methoden der organischen Chemie, Band E2, Seite 525-526 und Seite 667-668).

Die außerdem in der Verfahrensvariante (b) als Ausgangsstoffe einzusetzenden Alkohole und Alkoholate sind durch die Formel (V) definiert. In dieser Formel (V) steht R für diejenigen Reste, welche bei der Definition in Formel (I) angegeben sind.

Die Verbindungen der Formel (V) sind allgemein bekannte Verbindungen der organischen Chemie. Als Beispiele seien Methanol, Ethanol und n-Propanol und die Natrium- oder Kaliumsalze dieser Alkohole genannt.

Die erfindungsgemäßen Verfahrensvarianten (a) und (b) zur Herstellung der neuen Thiophosphorsäureester der Formel (I) werden bevorzugt unter Verwendung von Verdünnungsmitteln durchgeführt. Als Verdünnungsmittel kommen praktisch alle inerten organischen Lösungsmittel infrage.

Hierzu gehören insbesondere aliphatische, alicyclische oder aromatische, gegebenenfalls halogenierte Kohlenwasserstoffe, wie beispielsweise Benzin, Benzol, Toluol, Xylol, Chlorbenzol, Petrolether, Hexan, Cyclohexan, Dichlormethan, Chloroform, Tetrachlorkohlenstoff, Ether, wie Diethylether, Dioxan, Tetrahydrofuran oder Ethylenglykoldimethyl- oder -diethylether, Ketone wie Aceton oder Butanon, Nitrile, wie Acetonitril oder Propionitril, Amide, wie Dimethylformamid, Dimethylacetamid, N-Methylformanilid, N-Methylpyrrolidon oder Hexamethylphosphorsäuretriamid, Ester, wie Essigsäureethylester oder Sulfoxide, wie Dimethylsulfoxid.

Die Verfahrensvarianten (a) und (b) können gegebenenfalls in Gegenwart von Säureakzeptoren durchgeführt werden. Als Säureakzeptoren können alle üblichen Säurebindemittel Verwendung finden. Besonders bewährt haben sich Alkalicarbonate, wie Natrium- und Kaliumcarbonat, Alkalihydride, wie Natriumhydrid, ferner aliphatische, aromatische oder heterocyclische Amine, beispielsweise Triethylamin, Trimethylamin, Dimethylanilin, Dimethylbenzylamin und Pyridin.

Die erfindungsgemäßen Verfahrensvarianten (a) und (b) werden im allgemeinen bei Temperaturen zwischen 0°C und 100°C durchgeführt. Bevorzugt wird der Bereich zwischen 20°C und 8°C. Die Umsetzungen werden im allgemeinen bei Normaldruck durchgeführt.

Zur Durchführung der erfindungsgemäßen Verfahrensvarianten (a) und (b) werden die Ausgangsstoffe gewöhnlich annähernd in äquimolaren Mengen eingesetzt. Ein Überschuß der einen oder anderen Reaktionskomponente bringt keine wesentlichen Vorteile Die Umsetzung wird im allgemeinen in einem geeigneten Verdünnungsmittel in Gegenwart eines Säureakzeptors durchgeführt und das Reaktionsgemisch wird mehrere Stunden bei der erforderlichen Temperatur gerührt. Danach gibt man gegebenenfalls ein organisches Lösungsmittel, z.B. Toluol zu und arbeitet die organische Phase wie üblich durch Waschen, Trocknen und Abdestillieren des Lösungsmittels auf.

Die Verfahrensvariante (b) wird vorzugsweise als Eintopfreaktion (also ohne die Isolierung von Zwischenstufen) durchgeführt.

Die neuen Verbindungen fallen in Form von Ölen an, die sich zum Teil nicht unzersetzt destillieren lassen, jedoch durch sogenanntes "Andestillieren", d.h. durch längeres Erhitzen unter vermindertem Druck auf mäßig erhöhter Temperatur von den letzten flüchtigen Anteilen befreit und auf diese Weise gereinigt werden. Zu ihrer Charakterisierung dient der Brechungsindex.

Die Wirkstoffe eignen sich zur Bekämpfung von tierischen Schädlingen, vorzugsweise Arthropoden und Nematoden, insbesondere Insekten und Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis,

Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Acanthoscelides obtectus, Hylotrupes bajulus, Agelastica alni, Leptinotarsa decemlineata, Phaedon cochleariae, Diabrotica spp., Psylliodes chrysocephala, Epilachna varive stis, Atomaria spp., Oryzaephilus surinamensis, Antho nomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Cono derus spp., Melolontha melolontha, Amphimallon solsti tialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die erfindungsgemäßen Wirkstoffe der Formel (I) zeichnen sich durch eine hervorragende insektizide Wirksamkeit aus. Sie zeigen insbesondere beim Einsatz als Blattinsektizide und Bodeninsektizide eine hervorragende Wirkung gegen Maden, wie z.B. Phorbia antiqua-Maden, gegen Larven, wie z.B. Diabrotica balteata-Larven, gegen Blattläuse, wie Aphis-fabae, gegen Nematoden, wie Meliodogyne incognita und Globodera rostochiensis, gegen Orthoptera-Arten, wie z.B. Blattella germanica und gegen Coleoptera-Arten, wie z.B. Sitophilius granarius und gegen Hygieneschädlinge, wie Musca domestica-Dipteren und Lucilia cuprina-Larven.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als

flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a..

Die Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwen dungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die erfindungsgemäßen Wirkstoffe eignen sich auch zur Bekämpfung von unerwünschten Schädlingen, wie Insekten, Zecken und Milben auf dem Gebiet der Tierhaltung und Viehzucht, wobei durch die Bekämpfung der Schädlinge bessere Ergebnisse, z.B. höhere Milchleistungen, höheres Gewicht, schöneres Tierfell, längere Lebensdauer usw. erreicht werden können.

Die Anwendung der erfindungsgemäßen Wirkstoffe geschieht auf diesen Gebieten in bekannter Weise, wie durch äußerliche Anwendung in Form beispielsweise des Tauchens (Dippen), Sprühens (Sprayen) und Aufgießens (pour-on and spot-on).

Die Herstellung und die Verwendung der erfindungsgemäßen Wirkstoffe wird durch die folgenden Beispiele erläutert.

Im vorliegenden Test beziehen sich alle Prozentangaben auf Gewichtsprozente, wo nichts anderes angegeben wird.

Herstellungsbeispiele:

Beispiel 1:

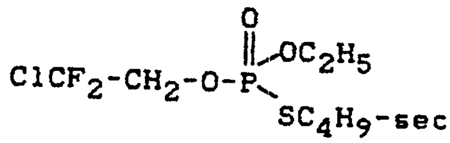

(Verfahrensvariante a)

Zu einer Mischung von 9,3 g (0,08 Mol) 2-Chlor-2,2-difluorethanol, 16,6 g (0,12 Mol) Kaliumcarbonat und 100 ml Acetonitril gibt man 17,4 g (0,08 Mol) Thiophosphorsäure-O-ethyl-S-sec-butylesterchlorid und rührt die Mischung 18 Stunden ohne Heizbad nach. Dann filtriert man vom anorganischen Salz ab, engt das Filtrat unter vermindertem Druck ein und löst den Rückstand in 200 ml Toluol. Die Toluollösung wird 3 mal mit je 100 ml Wasser gewaschen, über Natriumsulfat getrocknet und unter vermindertem Druck eingedampft. Den Rückstand destilliert man bei 50 - 60° C im Hochvakuum an.

Man erhält so 15,5 g (62 % der Theorie) Thiophosphorsäure-S-sec-butyl-O-(2-chlor-2,2-difluorethyl)-O-ethylester in Form eines farblosen Öls mit dem Brechungsindex $n_D^{22}$ 1,4472.

Beispiel 2:

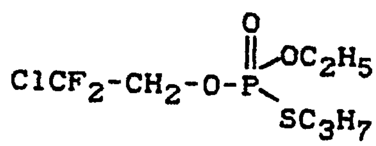

(Verfahren b)

Zu einer Lösung von 19,3 g (0,1 Mol) Thiophosphorsäure-S-propylester-dichlorid in 100 ml Toluol gibt man bei 0 - 5 °C erst 10,7 g (0,105 Mol) Triethylamin und dann 4,6 g (0,1 Mol) Ethanol. Man rührt 1,5 Stunden bei 0-5° C nach und gibt bei dieser Temperatur erst 10,7 g (0,105 Mol) Triethylamin und dann 11,6 g (0,1 Mol) 2-Chlor-2,2-difluorethanol zu. Die Mischung wird 1,5 Stunden bei 0 - 5 °C und dann 18 Stunden bei Raumtemperatur gerührt, 5 mal mit je 100 ml Wasser gewaschen und über Natriumsulfat getrocknet. Das Lösungsmittel wird unter vermindertem Druck abdestilliert; den Rückstand destilliert man bei 40° C im Hochvakuum an. Auf diese Weise werden 15,5 g (55 % der Theorie) Thiophosphorsäure-O-(2-chlor-2,2-difluorethyl)-O-ethyl-S-propylester in Form eines gelben Öles, mit dem Brechungsindex $n_D^{24}$ 1,4462 erhalten.

Beispiel 3:

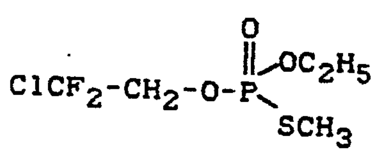

Analog zu den Beispielen 1 und 2 wird Thiophosphorsäure-S-methyl-O-(2-chlor-2,2-difluorethyl)-O-ethylester vom Siedepunkt $Kp_{0,1}$ 96-98 °C erhalten.

Beispiel 4

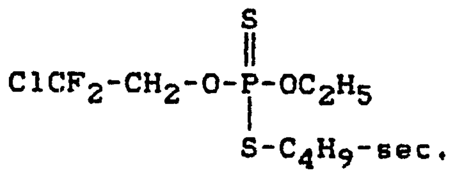

Analog zu den Beispielen 1 und 2 wird Dithiophosphorsäure-S-s-butyl-O-(2-chlor-2,2-difluorethyl)-O-ethylester mit dem Brechnungsindex $n_D^{25}$ = 1.4870 erhalten.

Anwendungsbeispiele :

In einigen der folgenden Anwendungsbeispiele wird die nachstehend aufgeführte Verbindung als Vergleichssubstanz eingesetzt:

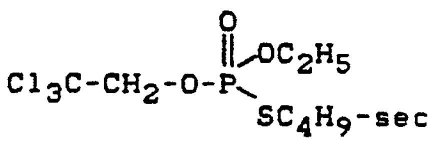

(A)

Thiophosphorsäure-S-sec-butyl-O-(2,2,2-trichlor-ethyl)-O-ethylester'
(bekannt aus EP 0 000 528).

Beispiel A

Grenzkonzentrations-Test / Bodeninsekten

Testinsekt: Phorbia-antiqua-Maden (im Boden)
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

In diesem Test zeigten die Verbindungen der Beispiele (1) und (2) bei einer beispielhaften Konzentration von 1,25 ppm einen Abtötungsgrad von 100%, während bei der gleichen Konzentration die Vergleichsverbindung (A) keine Abtötung (0%) ergab.

Beispiel B

Grenzkonzentrations-Test / Bodeninsekten

Testinsekt: Diabrotica balteata-Larven (im Boden)
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

In diesem Test zeigten die Verbindungen der Beispiele (1) und (2) bei einer beispielhaften Konzentration von 0,6 ppm einen Abtötungsgrad von 95 % und 100 %, während bei der gleichen Konzentration die Vergleichsverbindung (A) keine Abtötung (0%) ergab.

## Beispiel C

Grenzkonzentrations-Test / Nematoden

Testnematode: Meloidogyne incognita
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird Man füllt den behandelten Boden in Töpfe, sät Salat ein und hält die Töpfe bei einer Gewächshaus-Temperatur von 27 °C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

In diesem Test zeigte die Verbindung des Beispieles (1) bei einer beispielhaften Konzentration von 0,6 ppm einen Abtötungsgrad von 95 %, während bei der gleichen Konzentration die Vergleichsverbindung (A) keine Abtötung (0%) ergab.

## Beispiel D

Grenzkonzentrations-Test

Testnematode: Globodera rostochiensis
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht

ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, pflanzt Kartoffeln ein und hält die Töpfe bei einer Gewächshaus-Temperatur von 18 °C.

Nach sechs Wochen werden die Kartoffelwurzeln auf Zysten untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

In diesem Test zeigten die Verbindungen der Beispiele (1) und (2) bei einer beispielhaften Konzentration von 1,25 ppm einen Abtötungsgrad von 100 %, während bei der gleichen Konzentration die Vergleichsverbindung (A) keine Abtötung (0%) ergab.

## Beispiel E

Aphis-Test (systemische Wirkung)

Lösungsmittel: 7 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Mit je 20 ml Wirkstoffzubereitung der gewünschten Konzentration werden Bohnenpflanzen (Vicia faba), die stark von der schwarzen Bohnenlaus (Aphis fabae) befallen sind, angegossen, so daß die Wirkstoffzubereitung in den Boden eindringt, ohne den Sproß zu benetzen. Der Wirkstoff wird von den Wurzeln aufgenommen und in den Sproß weitergeleitet.

Nach der gewünschten Zeit wird die Abtötung in % bestimmt. Dabei bedeutet 100 %, daß alle Blattläuse abgetötet wurden; 0 % bedeutet, daß keine Blattläuse abgetötet wurden.

In diesem Test zeigten die Verbindungen der Beispiele (1) und (2) bei einer beispielhaften Konzentration von 0,1 % nach 4 Tagen einen Abtötungsgrad von 100 %, während bei der gleichen Konzentration die Vergleichverbindung (A) keine Abtötung (0 %) ergab.

## Beispiel F

$LT_{100}$-Test

Testtiere: Musca domestica, Stamm Weymanns (gegen Carbamate und Phosphorsäureester resistent)
Lösungsmittel: Aceton

Von den Wirkstoffen werden Lösungen hergestellt und 2,5 ml davon in Petrischalen auf Filterpapierscheiben von 9,5 cm Durchmesser pipettiert. Das Filterpapier saugt die Lösungen auf. Die Petrischalen bleiben so lange offen stehen, bis das Lösungsmittel vollständig verdunstet ist. Anschließend gibt man 25 Testtiere in die Petrischalen und bedeckt sie mit einem Glasdeckel.

Der Zustand der Testtiere wird bis zu 6 Stunden laufend kontrolliert. Es wird diejenige Zeit ermittelt, die für eine 100 %ige knock down-Wirkung erforderlich ist. Wird die $LT_{100}$ nach 6 Stunden nicht erreicht, wird der %-Satz der knock down gegangenen Testtiere festgestellt.

In diesem Test zeigte z.B. die Verbindung des Herstellungsbeispiels (2) bei einer beispielhaften Konzentration von 1000 ppm a.i. eine $LT_{100}$ von 100 Minuten.

## Beispiel G

$LD_{100}$-Test

Testtiere: Blattella germanica und Sitophila granaria

Zahl der Testtiere: Blattella g:3; Sitoph.g.: ca.20
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird 3 Tage nach Ansetzen der Versuche kontrolliert. Bestimmt wird die Abtötung in %. Dabei bedeutet 100 %, daß alle Testtiere abgetötet wurden; 0 % bedeutet, daß keine Testtiere abgetötet wurden.

In diesem Test zeigte z.B. die Verbindung des Herstellungsbeispiels (2) bei einer beispielhaften Konzentration von 1000 ppm eine 100 %ige Abtötung.

Beispiel H

Test mit Lucilia cuprina resistent-Larven

Emulgator: 35 Gewichtsteile Ethylenglykolmonomethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Gemisches und verdünnnt das so erhaltene Konzentrat mit Wasser auf die jeweils gewünschte Konzentration.

Etwa 50 Lucilia cuprina res.-Larven werden in ein Teströhrchen gebracht, welches ca. 1 $cm^3$ Pferdefleisch und 0,5 ml der Wirkstoffzubereitung enthält. Nach 24 Stunden wird der Abtötungsgrad bestimmt.

Bei diesem Test zeigten z.B. die Verbindungen (1) und (2) der Herstellungsbeispiele bei einer beispielhaften Konzentration von 100 ppm a.i. einen Abtötungsgrad von 100 %.

**Ansprüche**

1. Thiophosphorsäurefluoralkylester der allgemeinen Formel (I),

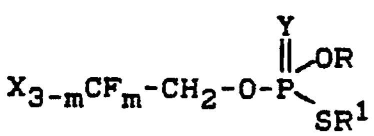

(I)

in welcher
R für Alkyl mit 1 bis 8 Kohlenstoffatomen,
$R^1$ für Alkyl mit 1 bis 8 Kohlenstoffatomen,
X für Chlor oder Brom,
Y für Sauerstoff oder Schwefel und
m für die Zahl 1 oder 2 steht.

2. Thiophosphorsäure-fluoralkylester der Formel (I) gemäß Anspruch 1, in welcher
R für Alkyl mit 3 bis 4 Kohlenstoffatomen,
$R^1$ für Alkyl mit 1 bis 4 Kohlenstoffatomen,
X für Chlor oder Brom,
Y für Sauerstoff oder Schwefel und
m für die Zahl 1 oder 2 steht.

3. Thiophosphorsäurefluoralkylester der Formel (I) gemäß Anspruch 1
in welchen
R für Methyl, Ethyl, n- oder i-Propyl, n-, i-, s-oder t-Butyl steht,
$R^1$ für Methyl, Ethyl, n- oder i-Propyl, n-, i-, s-oder t-Butyl steht,

X für Chlor oder Brom steht,
Y für Sauerstoff oder Schwefel steht und
m für die Zahl 1 oder 2 steht.

4. Verbindung der Formel

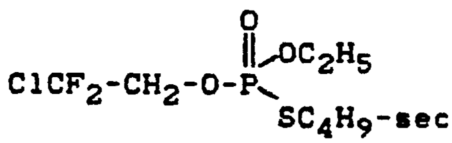

5. Verbindung der Formel

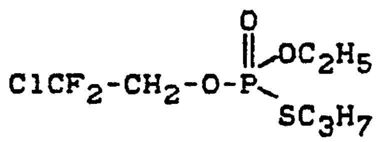

6. Verfahren zur Herstellung von Thiophosphorsäure-fluoralkylester der allgemeinen Formel (I),

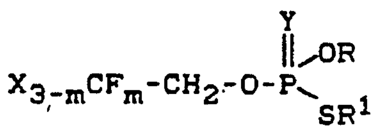
(I)

in welcher
R für Alkyl mit 1 bis 8 Kohlenstoffatomen,
$R^1$ für Alkyl mit 1 bis 8 Kohlenstoffatomen,
X für Chlor oder Brom,
Y für Sauerstoff oder Schwefel und
m für die Zahl 1 oder 2 steht,
dadurch gekennzeichnet, daß man

a) Halogenalkohol- oder Halogenalkoholat-Derivate der allgemeinen Formel (II)

$X_{3-m}CF_m-CH_2-OM$ (II)

in welcher
X und m die oben angegebene Bedeutung haben und
M für Wasserstoff oder ein Alkalimetallkation steht,
mit Thiophosphorsäurehalogeniden der Formel (III),

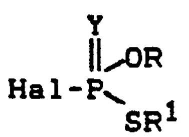
(III)

in welcher
R, $R^1$ und Y die oben angegebene Bedeutung haben und
Hal für Halogen steht,
gegebenenfalls in Gegenwart eines Säureakzeptors und gegebenenfalls in Gegenwart eines Verdünnungsmittels umsetzt,
oder

b) Thionophosphorsäuredichloride der Formel (IV)

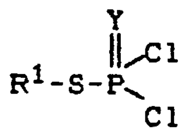

(IV)

in welcher

$R^1$ und Y die oben angegebene Bedeutung haben,

zunächst mit Alkoholen oder Alkoholaten der Formel (V),

R - OM (V)

in welcher

R und M die oben angegebene Bedeutung haben, und anschließend mit Halogenalkohol-Derivaten der Formel (II)

$X_{3-m}CF_m$-$CH_2$-OM (II)

in welcher

X, M und m die oben angegebene Bedeutung haben,

gegebenenfalls in Gegenwart eines Säureakzeptors und gegebenenfalls in Gegenwart eines Verdünnungsmittels umsetzt.

7. Schädlingsbekämpfungsmittel, gekennzeichnet durch einen Gehalt an mindestens einer Verbindung gemäß den Ansprüchen 1 bis 5 bzw. der Formel (I) gemäß Anspruch 6.

8. Verwendung von Verbindungen gemäß den Ansprüchen 1 bis 5 bzw. der Formel (I) gemäß Anspruch 6 zur Bekämpfung von Schädlingen, insbesondere von Insekten und Nematoden.

9. Verfahren zur Bekämpfung von Schädlingen, dadurch gekennzeichnet, daß man Verbindungen gemäß den Ansprüchen 1 bis 5 bzw. der Formel (I) gemäß Anspruch 6 auf die Schädlinge, vorzugsweise Insekten oder ihren Lebensraum einwirken läßt.

10. Verfahren zur Herstellung von Schädlingsbekämpfungsmitteln, dadurch gekennzeichnet, daß man Verbindungen gemäß den Ansprüchen 1 bis 5 bzw. der Formel (I) gemäß Anspruch 6 mit Streckmitteln und/oder oberflächenaktiven Mitteln vermischt.